# EUROPÄISCHE PATENTSCHRIFT

(11) **EP 3 368 388 B1**
(45) Veröffentlichungstag und Bekanntmachung des Hinweises auf die Patenterteilung: **18.05.2022**
(21) Anmeldenummer: 16781812.9
(22) Anmeldetag: 14.10.2016
(51) Int. Cl.: B60W 30/06, B60W 30/095, B60W 30/10, B60W 40/04, B60Q 9/00, B62D 15/02, B60W 50/14

(54) **VERFAHREN ZUM MANÖVRIEREN EINES KRAFTFAHRZEUGS MIT BEWEGEN DES KRAFTFAHRZEUGS IN EINE ERFASSUNGSPOSITION, FAHRERASSISTENZSYSTEM SOWIE KRAFTFAHRZEUG**
METHOD FOR MANOEUVRING A MOTOR VEHICLE WITH MOVEMENT OF THE MOTOR VEHICLE INTO A DETECTION POSITION, DRIVER ASSISTANCE SYSTEM AND MOTOR VEHICLE
PROCÉDÉ DE MANOEUVRE D'UN VÉHICULE AUTOMOBILE PAR DÉPLACEMENT DU VÉHICULE AUTOMOBILE DANS UNE POSITION DE DÉTECTION, SYSTÈME D'AIDE À LA CONDUITE ET VÉHICULE AUTOMOBILE

(30) Priorität: 30.10.2015 DE 102015118578
(43) Veröffentlichungstag der Anmeldung: 05.09.2018
(73) Patentinhaber: Valeo Schalter und Sensoren GmbH, 74321 Bietigheim-Bissingen (DE)
(72) Erfinder: MARASLIS, Christos, 74321 Bietigheim-Bissingen (DE); MENAKA, Eduardo, 74321 Bietigheim-Bissingen (DE)
(74) Vertreter: Pothmann, Karsten
(86) Internationale Anmeldenummer: PCT/EP2016/074789
(87) Internationale Veröffentlichungsnummer: WO 2017/071979

(56) Entgegenhaltungen:
- EP-A1- 1 674 885
- EP-A2- 2 696 215
- DE-A1-102012 007 986
- DE-A1-102013 019 145
- US-A1- 2013 245 877

## Beschreibung

Die vorliegende Erfindung betrifft ein Verfahren zum Manövrieren eines Kraftfahrzeugs, bei welchem das Kraftfahrzeug innerhalb eines bestimmten Fahrschlauchs manövriert wird, während des Manövrierens mittels einer Steuereinrichtung anhand von Sensordaten zumindest eines Sensors des Kraftfahrzeugs, welcher einen vorbestimmten Detektionsbereich aufweist, eine Position zumindest eines Objekts in einem Umgebungsbereich des Kraftfahrzeugs fortlaufend bestimmt wird und falls sich das zumindest eine Objekt außerhalb des Detektionsbereichs des zumindest einen Sensors befindet, die Position des zumindest einen Objekts geschätzt wird. Darüber hinaus betrifft die vorliegende Erfindung ein Fahrerassistenzsystem für ein Kraftfahrzeug. Schließlich betrifft die vorliegende Erfindung ein Kraftfahrzeug.

Das Interesse richtet sich vorliegend insbesondere auf Fahrerassistenzsysteme für Kraftfahrzeuge, welche den Fahrer beim Manövrieren des Kraftfahrzeugs unterstützen. Beispielsweise sind Fahrerassistenzsysteme bekannt, mittels welchen das Kraftfahrzeug autonom beziehungsweise automatisch in eine Parklücke eingeparkt werden kann. Ferner gibt es im Stand der Technik Fahrerassistenzsysteme, welche automatisch eine Notbremsung durchführen, falls eine Kollision zwischen dem Kraftfahrzeug und einem Objekt beziehungsweise einem Hindernis droht. Dabei werden die Fahrerassistenzsysteme vermehrt auf Grundlage einer digitalen Umfeldkarte betrieben, welche den Umgebungsbereich des Kraftfahrzeugs beschreibt. Diese Umfeldkarte beinhaltet Informationen über die Objekte in dem Umgebungsbereich des Kraftfahrzeugs, die mit den Sensoren des Fahrerassistenzsystems erkannt wurden. Bei den Sensoren kann es sich beispielsweise um Ultraschallsensoren, Kameras, Radarsensoren, Laserscanner oder dergleichen handeln. In der digitalen Umfeldkarte werden die Positionen der Objekte mittels unterschiedlicher Ansätze, beispielsweise mittels Triangulation, bestimmt. Durch die Kenntnis der Position der Objekte kann das Fahrerassistenzsystem verschiedene Aktionen durchführen.

Das Kraftfahrzeug kann dann unter Verwendung der Sensordaten, die mit den Sensoren bereitgestellt werden, autonom beziehungsweise automatisch manövriert werden. Dies beinhaltet beispielsweise bei Parksystemen die automatische Längs- und Querführung des Kraftfahrzeugs. Zudem kann eine automatische Gangwahl erfolgen und es kann vorgesehen sein, dass eine Parkbremse verwendet wird. Darüber hinaus sind Fahrerassistenzsysteme bekannt, die das Kraftfahrzeug unter Verwendung der Umfeldsensorik autonom um Objekte beziehungsweise Hindernisse herum in eine Zielposition, beispielsweise in eine Garage oder eine Einfahrt, oder durch eine enge Passage führt. Hierzu kann mit dem Fahrerassistenzsystem ein Fahrschlauch bestimmt werden, in dem das Kraftfahrzeug kollisionsfrei bewegt werden kann.

Die Sensoren des Fahrerassistenzsystems weisen jeweils einen Detektionsbereich auf.

Dieser Detektionsbereich beschreibt den Bereich, in dem mit dem jeweiligen Sensor ein Objekt erfasst werden kann. Je nach Position und Ausrichtung des Sensors können sich in einem Nahbereich um die Fahrzeugkontur sogenannte Blindbereiche bilden, in denen ein Objekt nicht mehr erfasst werden kann. Hierzu ist es aus dem Stand der Technik bekannt, die Position des Objekts unter Berücksichtigung der Eigenbewegung des Kraftfahrzeugs und der Eigengeschwindigkeit der Objekte nachzuverfolgen beziehungsweise zu tracken. In diesem Zusammenhang beschreibt die EP 1 668 385 B1 ein Verfahren zum Ermitteln des projizierten Abstands zwischen einer Abstandsmesseinrichtung und einem Hindernis. Hierzu wird ein Grenzzeitpunkt bestimmt, der beschreibt, wann der zu der Abstandsmesseinrichtung nächstliegende Punkt eines Hindernisses aus dem Detektionsbereich der Abstandsmesseinrichtung entschwindet. Anhand von Informationen über die Relativbewegung der Abstandsmesseinrichtung und des Hindernisses kann dann der projizierte Abstand bestimmt werden.

US2013/245877 A1 zeigt ein Verfahren zum aktiven Anpassen eines teilweise abgeschatteten Sichtbereichs eines autonomen Fahrzeugs, bei dem eine Position des Fahrzeugs verändert wird, um ein gewünschtes Sichtfeld zu erreichen.

DE10 2013 019 145 A1 zeigt ein Verfahren zum Betrieb eines Kraftfahrzeugs, bei dem, falls zu einem relevanten Unterbereich eines Umfeldmodells keine Sensordaten vorliegen, das Fahrzeug mittels eines Fahreingriffs in eine Zielstellung gebracht wird, in der wenigstens ein Sensor den Unterbereich erfasst.

EP 2 696 215 A2 zeigt ein Parkassistenzsystem, bei dem eine Position eines Hindernisses in einem Umfeld erkannt und gespeichert wird. Wenn dieses während einer Fahrt in einen Blindbereich eines Sensors gelangt, wird ein Fahrer zum Umkehren der Fahrtrichtung aufgefordert.

Ein großer Nachteil an den bekannten Verfahren ist, dass Objekte in dem Blindbereich des Sensors nicht nachvermessen werden können und es deswegen nicht bekannt ist, ob sich das Objekt innerhalb eines vorbestimmten Fahrschlauchs, in dem das Kraftfahrzeug manövriert wird, befindet oder diesen bereits verlassen hat. Somit kann das Kraftfahrzeug nicht zuverlässig kollisionsfrei manövriert werden. Weiterhin kann es vorkommen, dass das Kraftfahrzeug vor einem Objekt, mit dem eine Kollision droht, stehen bleibt. Wandert ein Objekt durch die Bewegung des Kraftfahrzeugs selbst oder die Eigenbewegung des Objekts in den Blindbereich des Sensors, kann nicht mit Sicherheit überprüft werden, ob das Objekt den Fahrschlauch des Kraftfahrzeugs verlassen hat. Somit kann das Kraftfahrzeug nicht mit der erforderlichen Sicherheit manövriert werden.

Es ist Aufgabe der vorliegenden Erfindung, eine Lösung aufzuzeigen, wie ein Kraftfahrzeug auf Grundlage der Daten zumindest eines Sensors zuverlässiger manövriert werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche, der Beschreibung und der Figuren.

Ein erfindungsgemäßes Verfahren dient zum Manövrieren eines Kraftfahrzeugs. Hierbei wird das Kraftfahrzeug innerhalb eines bestimmten Fahrschlauchs manövriert. Während des Manövrierens wird mittels einer Steuereinrichtung anhand von Sensordaten zumindest eines Sensors des Kraftfahrzeugs, welcher einen vorbestimmten Detektionsbereich aufweist, eine Position zumindest eines Objekts in einem Umgebungsbereich des Kraftfahrzeugs fortlaufend bestimmt. Falls sich das zumindest eine Objekt außerhalb des Detektionsbereichs des zumindest einen Sensors befindet, wird die Position des zumindest einen Objekts geschätzt. Zudem wird mittels der Steuereinrichtung eine Erfassungsposition bestimmt und das Kraftfahrzeug wird zu der Erfassungsposition bewegt, falls sich das zumindest eine Objekt außerhalb des Detektionsbereichs befindet. Dabei ist die Erfassungsposition derart bestimmt, dass sich die geschätzte Position des zumindest einen Objekts innerhalb des Detektionsbereichs befindet, falls sich das Kraftfahrzeug an der Erfassungsposition befindet.

Vorliegend soll das Kraftfahrzeug mit Hilfe einer Steuereinrichtung eines Fahrerassistenzsystems manövriert werden. Bei der Steuereinrichtung kann es sich beispielsweise um ein elektronisches Steuergerät (ECU - Electronic Control Unit) des Kraftfahrzeugs handeln. Ferner umfasst das Fahrerassistenzsystem zumindest einen Sensor, der beispielsweise als Ultraschallsensor, Radarsensor, Laserscanner, Lidar-Sensor, Kamera oder dergleichen ausgebildet sein kann. Bevorzugt ist es vorgesehen, dass das Fahrerassistenzsystem eine Mehrzahl von Sensoren umfasst, die beispielsweise verteilt an dem Kraftfahrzeug angeordnet sind. Der zumindest eine Sensor kann zur Datenübertragung mit der Steuereinrichtung verbunden sein. Auf diese Weise können mit der Steuereinrichtung Sensordaten des Sensors empfangen werden. Die Sensordaten des Sensors können insbesondere eine Abstandsinformation, welche den Abstand zwischen dem Kraftfahrzeug und dem zumindest einen Objekt beschreiben, beinhalten. Damit kann mittels der Steuereinrichtung anhand der Sensordaten die Position des zumindest einen Objekts beziehungsweise die relative Lage zwischen dem Kraftfahrzeug und dem zumindest einen Objekt bestimmt werden. Das Kraftfahrzeug wird innerhalb eines bestimmten Fahrschlauchs manövriert. Dieser Fahrschlauch kann beispielsweise mittels der Steuereinrichtung anhand der Position des zumindest einen Objekts bestimmt werden. Hierzu kann die Steuereinrichtung die Sensordaten heranziehen und den Fahrschlauch derart planen, dass das Kraftfahrzeug kollisionsfrei manövriert werden kann. Während der Fahrt innerhalb des Fahrschlauchs wird anhand der Sensordaten fortlaufend die Position des zumindest einen Objekts bestimmt. Die Positionsbestimmung des zumindest einen Objekts ist möglich, falls sich das zumindest eine Objekt in dem Detektionsbereich des Sensors befindet. Der Detektionsbereich beschreibt denjenigen Bereich in dem Umgebungsbereich des Kraftfahrzeugs, in dem mit dem Sensor Objekte beziehungsweise Hindernisse erfasst werden können. Auf Grundlage der Sensordaten kann überprüft werden, ob sich das Objekt in dem Detektionsbereich des Sensors befindet. Somit kann auch eine Situation erkannt werden, bei der das zumindest eine Objekt zunächst in dem Detektionsbereich des Kraftfahrzeugs angeordnet ist und beispielsweise bei der Bewegung des Kraftfahrzeugs und/oder des Objekts den Detektionsbereich verlässt.

Falls sich das zumindest eine Objekt nicht oder nicht mehr in dem Detektionsbereich des zumindest einen Sensors befindet, kann die Position des zumindest einen Objekts mittels der Steuereinrichtung geschätzt werden. Hierzu kann beispielsweise die Bewegung des Kraftfahrzeugs herangezogen werden. Insbesondere kann die aktuelle Geschwindigkeit und/oder die aktuelle Fahrtrichtung des Kraftfahrzeugs verwendet werden, um die Position des zumindest einen Objekts, das sich außerhalb des Detektionsbereichs befindet, zu schätzen. Ferner kann anhand der Sensordaten bestimmt werden, ob es sich bei dem Objekt um ein statisches Objekt oder um ein bewegtes Objekt handelt. Des Weiteren kann die Relativbewegung zwischen dem Kraftfahrzeug und dem zumindest einen Objekt bestimmt werden und bei dem Schätzen der Position berücksichtigt werden. Obwohl die Position des Kraftfahrzeugs geschätzt wird, kann diese nicht mit der erforderlichen Sicherheit bestimmt werden. Dies kann im schlimmsten Fall dazu führen, dass eine Kollision zwischen dem Kraftfahrzeug und dem zumindest einen Objekt erfolgt.

Erfindungsgemäß ist es nun vorgesehen, dass mittels der Steuereinrichtung eine Erfassungsposition bestimmt wird und das Kraftfahrzeug zu der Erfassungsposition bewegt wird, falls sich das zumindest eine Objekt außerhalb des Detektionsbereichs befindet. Mit anderen Worten wird mittels der Steuereinrichtung das Manövrieren des Kraftfahrzeugs innerhalb des Fahrschlauchs unterbrochen und es wird ein zusätzliches Fahrmanöver durchgeführt, bei dem das Kraftfahrzeug zu der Erfassungsposition bewegt wird. Die Erfassungsposition ist dabei derart gewählt, dass sich die geschätzte Position des Objekts innerhalb des Detektionsbereichs des Sensors befindet, falls sich das Kraftfahrzeug in der Erfassungsposition befindet. Somit wird es möglich, das zumindest eine Objekt nachzuvermessen, indem das Kraftfahrzeug so bewegt wird, dass die letzte Position beziehungsweise die vermutete Lage des zumindest einen Objekts wieder in dem Detektionsbereich des Sensors gebracht wird. Auf diese Weise wird es möglich, die aktuelle Position des Objekts zuverlässig mit Hilfe des Sensors zu bestimmen. Dadurch kann eine Kollision zwischen dem Kraftfahrzeug und dem zumindest einen Objekt verhindert werden. Zudem kann das Manöver fortgesetzt werden, falls erkannt wird, dass eine kollisionsfrei Weiterfahrt in dem Fahrschlauch möglich ist.

Erfindungsgemäß wird das Kraftfahrzeug zu der Erfassungsposition bewegt, falls sich das zumindest eine Objekt in einem vorbestimmten Blindbereich des zumindest einen Sensors befindet, welcher zwischen dem Detektionsbereich und einer Außenfläche des Kraftfahrzeugs angeordnet ist. Der Detektionsbereich des Sensors kann sich beispielsweise ausgehend von dem Sensor kegelförmig erstrecken. Zwischen diesem Detektionsbereich und der Außenfläche beziehungsweise einer Außenhülle des Kraftfahrzeugs ist der sogenannte Blindbereich angeordnet, in welchem das zumindest eine Objekt mit dem Sensor nicht oder nicht vollständig erfasst werden kann. Dies ist insbesondere der Fall, wenn es sich bei dem Objekt um ein niedriges Objekt handelt, das eine Höhe aufweist, die geringer ist als eine Einbauhöhe des Sensors. Falls sich das Kraftfahrzeug beispielsweise während der Fahrt innerhalb des Fahrschlauchs auf das Objekt zu bewegt, kann es der Fall sein, dass das zumindest eine Objekt zunächst in dem Detektionsbereich des Sensors angeordnet ist und anschließend aus dem Detektionsbereich entschwindet. In diesem Fall befindet sich das zumindest eine Objekt üblicherweise sehr nahe an dem Kraftfahrzeug. Es kann auch vorkommen, dass mit dem Fahrerassistenzsystem eine Notbremsung durchgeführt wird, da eine Kollision mit dem Objekt droht. Nach Durchführen der Bremsung kann sich das Objekt sehr nahe an dem Kraftfahrzeug befinden. Um das Objekt erfassen zu können, wird das Kraftfahrzeug in die Erfassungsposition bewegt. Somit kann eine möglichen Kollision mit dem Objekt vermieden werden.

In einer Ausgestaltung wird das Kraftfahrzeug zu der Erfassungsposition innerhalb des bestimmten Fahrschlauchs in entgegengesetzter Fahrtrichtung bewegt. Beispielsweise kann es vorgesehen sein, dass das Kraftfahrzeug beim Manövrieren innerhalb des Fahrschlauchs in einer ersten Fahrtrichtung bewegt wird. Um das Kraftfahrzeug zu der Erfassungsposition zu bewegen, kann es vorgesehen sein, dass das Kraftfahrzeug innerhalb des Fahrschlauchs in einer zur ersten Fahrtrichtung entgegengesetzten, zweiten Fahrtrichtung bewegt wird. Das Kraftfahrzeug wird also zunächst innerhalb des Fahrschlauchs bewegt. Falls das zumindest eine Objekt in den Blindbereich gelangt beziehungsweise außerhalb des Detektionsbereichs angeordnet ist, kann das Fahrzeug angehalten werden. Danach kann es entlang des Fahrschlauchs zurückbewegt werden, bis es die Erfassungsposition erreicht. Somit kann die Erfassungsposition auf einfache Weise bestimmt werden.

In einer weiteren Ausführungsform wird die Erfassungsposition in Abhängigkeit von einer relativen Lage des Kraftfahrzeugs zu dem zumindest einen Objekt und dem Detektionsbereich des zumindest einen Sensors bestimmt. Beispielsweise können mit der Steuereinrichtung die Sensordaten ausgewertet werden, die das Objekt zu dem Zeitpunkt beschreiben, in dem es sich noch in dem Detektionsbereich des Sensors befunden hat. Anhand dieser Sensordaten kann dann die relative Lage des Kraftfahrzeugs beziehungsweise des Sensors zu dem Objekt bestimmt werden. Zudem kann die Einbaulage und der Detektionsbereich des Sensors berücksichtigt werden, um die Erfassungsposition zu bestimmen. Falls es sich bei dem Objekt um ein bewegtes Objekt handelt, kann zudem die Bewegung des Objekts innerhalb des Blindbereichs abgeschätzt werden. Somit kann die Erfassungsposition zuverlässig bestimmt werden und es kann garantiert werden, dass das Objekt quasi nachvermessen werden kann, falls sich das Kraftfahrzeug an der Erfassungsposition befindet.

Erfindungsgemäß wird an der Erfassungsposition anhand der Sensordaten während einer vorbestimmten zeitlichen Dauer überprüft, ob das zumindest eine Objekt innerhalb des bestimmten Fahrschlauchs angeordnet ist. Wenn sich das Kraftfahrzeug an der Erfassungsposition befindet, können während einer vorbestimmten zeitlichen Dauer mit dem Sensor zeitlich aufeinanderfolgende Messzyklen durchgeführt werden. In jedem der Messzyklen können die Sensordaten bestimmt werden und an die Steuereinrichtung übertragen werden. Somit kann mittels der Steuereinrichtung während der vorbestimmten zeitlichen Dauer überprüft werden, ob sich das Objekt innerhalb des Detektionsbereichs befindet oder nicht. Zudem kann untersucht werden, ob es sich bei dem Objekt um ein statisches Objekt handelt oder um ein bewegtes Objekt, welches sich beispielsweise aus dem Fahrschlauch heraus bewegt. Somit wird auf zuverlässige Weise überprüft, ob bei einer nachfolgenden Bewegung des Kraftfahrzeugs innerhalb des Fahrschlauchs eine Kollision mit dem Objekt droht oder nicht.

In einer Ausführungsform wird das Kraftfahrzeug weiter innerhalb des bestimmten Fahrschlauchs bewegt, falls das zumindest eine Objekt nicht in dem bestimmten Fahrschlauch angeordnet ist. Wenn sich das Kraftfahrzeug an der Erfassungsposition befindet, wird überprüft, ob das zumindest eine Objekt innerhalb des Fahrschlauchs angeordnet ist. Ist dies nicht der Fall, kann die Bewegung des Kraftfahrzeugs entlang des bestimmten Fahrschlauchs fortgeführt werden, da keine Kollision mit dem Objekt droht. Dabei kann es auch vorgesehen sein, dass zunächst das Kraftfahrzeug von der Erfassungsposition wieder zurück in den Fahrschlauch bewegt wird und danach die Fahrt entlang des Fahrschlauchs fortgeführt wird. Damit kann das Kraftfahrzeug sicher und zuverlässig manövriert werden.

In einer weiteren Ausgestaltung wird ein veränderter Fahrschlauch bestimmt und das Kraftfahrzeug wird innerhalb des veränderten Fahrschlauchs bewegt, falls das zumindest eine Objekt in dem bestimmten Fahrschlauch angeordnet ist. Falls an der Erfassungsposition erkannt wurde, dass sich das Objekt innerhalb des ursprünglich geplanten Fahrschlauchs befindet, kann ein veränderter Fahrschlauch bestimmt werden. Insbesondere wird dieser veränderte Fahrschlauch derart bestimmt, dass eine Kollision zwischen dem Kraftfahrzeug und dem zumindest einen Objekt unterbleibt. Beispielsweise kann der veränderte Fahrschlauch so bestimmt werden, dass das Kraftfahrzeug bei der Fahrt innerhalb des Fahrschlauchs an dem Objekt vorbei bewegt wird. Der veränderte Fahrschlauch kann auch so bestimmt werden, dass das Kraftfahrzeug in Richtung des Objekts bewegt wird und das Kraftfahrzeug in einem vorbestimmten Mindestabstand vor dem Objekt angehalten wird. Dies kann beispielsweise der Fall sein, wenn das Objekt beim Bewegen entlang des bestimmten Fahrschlauchs in eine Parklücke eingeparkt werden soll und sich das zumindest eine Objekt innerhalb der Parklücke befindet. Hierbei kann es beispielsweise möglich sein, dass das Kraftfahrzeug in die Parklücke bewegt wird und die Fahrt des Kraftfahrzeugs in dem Mindestabstand zu dem Objekt beendet wird, falls die Parklücke ausreichend groß ist.

Weiterhin ist es vorteilhaft, wenn eine Ausgabe an den Fahrer des Kraftfahrzeugs ausgegeben wird, falls das zumindest eine Objekt in dem bestimmten Fahrschlauch angeordnet ist. Das Fahrerassistenzsystem kann eine entsprechende Ausgabeeinrichtung aufweisen, mit der eine Ausgabe beziehungsweise ein Warnhinweis optisch, akustisch und/oderhaptisch an den Fahrer des Kraftfahrzeugs ausgegeben werden kann. Somit kann der Fahrer beispielsweise darauf hingewiesen werden, dass sich ein Objekt innerhalb des bestimmten Fahrschlauchs befindet und ein veränderter Fahrschlauch bestimmt wird. Es kann auch vorgesehen sein, dass bei einem zumindest semi-autonomen Manövrieren des Kraftfahrzeugs das Manövrieren abgebrochen wird und das Fahrerassistenzsystem an den Fahrer übergibt. Hierbei kann eine entsprechende Ausgabe erfolgen. Grundsätzlich kann es auch vorgesehen sein, dass mit der Ausgabeeinrichtung eine entsprechende Information an den Fahrer ausgegeben wird, dass das Kraftfahrzeug in der Erfassungsposition bewegt wird. Somit wird insbesondere bei einem semi-autonomen Manövrieren der Fahrer des Kraftfahrzeugs fortlaufend informiert.

Bevorzugt wird das Kraftfahrzeug mittels der Steuereinrichtung zumindest semi-autonom innerhalb des bestimmten Fahrschlauchs manövriert. Wie bereits erläutert, erfolgt das Manövrieren des Kraftfahrzeugs innerhalb des bestimmten Fahrschlauchs zumindest semi-autonom. Dabei kann das Fahrerassistenzsystem den Eingriff in die Lenkung übernehmen und dem Fahrer des Kraftfahrzeugs ist es weiterhin zugeteilt, das Gaspedal und die Bremse zu betätigen. Alternativ dazu kann das Kraftfahrzeug vollautonom beziehungsweise automatisch entlang des Fahrschlauchs manövriert werden. In diesem Fall übernimmt das Fahrerassistenzsystem zudem den Eingriff in einen Antriebsmotor des Kraftfahrzeugs und die Bremsanlage.

In einer weiteren Ausführungsform wird mittels der Steuereinrichtung ein Steuersignal von einer kraftfahrzeugexternen Bedieneinrichtung empfangen und das Kraftfahrzeug wird in Abhängigkeit von dem empfangenen Steuersignal innerhalb des bestimmten Fahrschlauchs manövriert. Grundsätzlich ist eine Erweiterung des Manövrierens des Kraftfahrzeugs durch eine kraftfahrzeugexterne Bedieneinrichtung beziehungsweise eine Fernsteuerung möglich. Die fahrzeugexterne Bedieneinrichtung kann beispielsweise durch ein Smartphone, einen Funkschlüssel oder dergleichen gebildet sein. In diesem Fall bedient beispielsweise der Fahrer des Kraftfahrzeugs die Bedieneinrichtung. Von der Bedieneinrichtung werden auf Grundlage der Bedieneingaben des Fahrers entsprechende Steuersignale erzeugt und an die Steuereinrichtung des Kraftfahrzeugs übertragen. Mittels der Steuereinrichtung kann dann das Kraftfahrzeug manövriert werden. Eine derartige Fernsteuerung ist beispielsweise denkbar, wenn das Kraftfahrzeug in eine Parklücke eingeparkt wird oder aus einer Parklücke ausgeparkt wird. Dies ist insbesondere vorteilhaft, wenn die Parklücke räumlich begrenzt ist und das Einsteigen beziehungsweise das Aussteigen für den Fahrer nur schwer möglich ist.

Bevorzugt wird die Position des zumindest einen Objekts in eine digitale Umfeldkarte eingetragen, welche den Umgebungsbereich des Kraftfahrzeugs beschreibt. Anhand der Sensordaten kann mittels der Steuereinrichtung die Position des zumindest einen Objekts beziehungsweise die relative Lage zwischen dem Kraftfahrzeug und dem Objekt bestimmt werden. Diese Information kann in die digitale Umfeldkarte eingetragen werden. Beispielsweise kann die relative Lage zwischen dem Kraftfahrzeug und dem Objekt bezüglich eines Bezugspunkts des Kraftfahrzeugs bestimmt werden. Falls das Fahrerassistenzsystem mehrere Sensoren und/oder mehrere unterschiedliche Sensoren aufweist, kann mit jedem der Sensoren die Position des zumindest einen Objekts bestimmt werden und in die Umfeldkarte eingetragen werden.

Eine erfindungsgemäße Steuereinrichtung für ein Fahrerassistenzsystem eines Kraftfahrzeugs ist zum Durchführen eines erfindungsgemäßen Verfahrens ausgelegt. Die Steuereinrichtung kann beispielsweise durch ein elektronisches Steuergerät des Kraftfahrzeugs gebildet sein. Alternativ dazu kann die Steuereinrichtung durch einen digitalen Signalprozessor, einen Mikroprozessor oder einen sonstigen Rechner gebildet sein.

Ein erfindungsgemäßes Fahrerassistenzsystem für ein Kraftfahrzeug umfasst eine erfindungsgemäße Steuereinrichtung und zumindest einen Sensor. Bevorzugt umfasst das Fahrerassistenzsystem eine Mehrzahl von Sensoren, die beispielsweise verteilt an dem Kraftfahrzeug angeordnet sind. Die Sensoren können zudem zur Datenübertragung über einen speziellen Fahrzeugdatenbus mit der Steuereinrichtung verbunden sein. Das Fahrerassistenzsystem kann beispielsweise als eine Parkhilfe, als Notbremsassistent oder dergleichen ausgebildet sein.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Steuereinrichtung, das erfindungsgemäße Fahrerassistenzsystem sowie das erfindungsgemäße Kraftfahrzeug.

Weitere Merkmale der Erfindung ergeben sich aus den Ansprüchen, den Figuren und der Figurenbeschreibung.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung in einer Draufsicht;
- Fig. 2: das Kraftfahrzeug, welches innerhalb eines bestimmten Fahrschlauchs bewegt wird;
- Fig. 3: das Kraftfahrzeug während des Manövrierens in dem Fahrschlauch zu unterschiedlichen Zeitpunkten, wobei das Kraftfahrzeug in Vorwärtsfahrtrichtung bewegt wird; und
- Fig. 4: das Kraftfahrzeug während des Manövrierens in einem weiteren Fahrschlauch zu den unterschiedlichen Zeitpunkten, wobei das Kraftfahrzeug in Rückwärtsfahrtrichtung bewegt wird.

In den Figuren werden gleiche und funktionsgleiche Elemente mit den gleichen Bezugszeichen versehen.

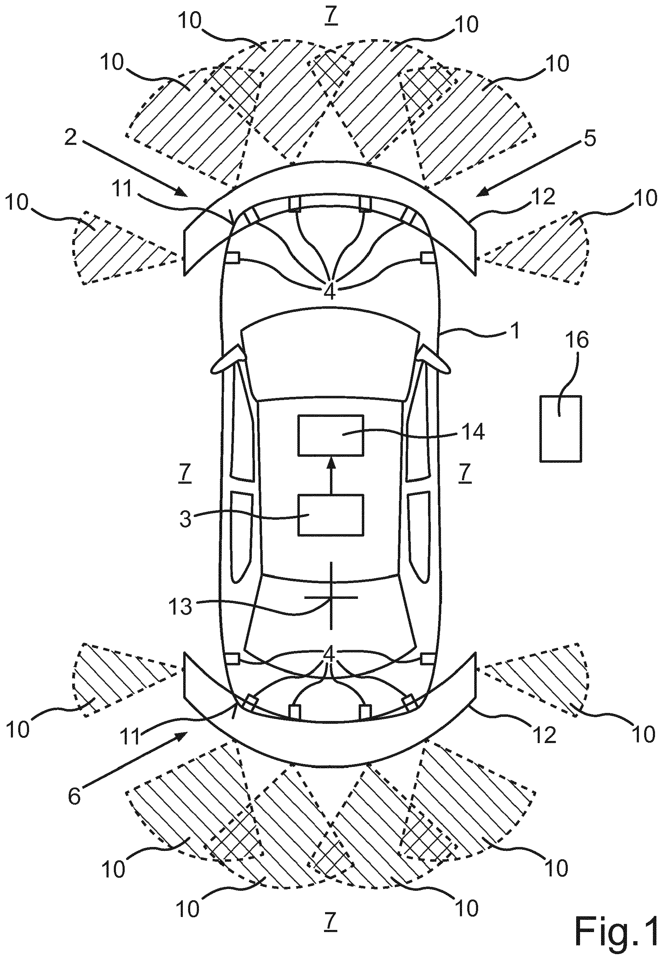

Fig. 1 zeigt ein Kraftfahrzeug 1 gemäß einer Ausführungsform der vorliegenden Erfindung in einer Draufsicht. Das Kraftfahrzeug 1 umfasst ein Fahrerassistenzsystem 2, welches dazu dient, einen Fahrer des Kraftfahrzeugs 1 beim Manövrieren des Kraftfahrzeugs 1 zu unterstützen. Das Fahrerassistenzsystem 2 umfasst eine Steuereinrichtung 3, die beispielsweise durch ein elektronisches Steuergerät des Kraftfahrzeugs 1 gebildet sein kann.

Des Weiteren umfasst das Fahrerassistenzsystem 2 zumindest einen Sensor 4. In dem vorliegenden Ausführungsbeispiel umfasst das Fahrerassistenzsystem 2 zwölf Sensoren 4, wobei sechs Sensoren 4 in einem Frontbereich 5 und sechs Sensoren 4 in einem Heckbereich 6 angeordnet sind. In dem vorliegenden Ausführungsbeispiel sind die Sensoren 4 jeweils als Ultraschallsensoren ausgebildet. Mit den Sensoren 4 können Objekte 8, 9 beziehungsweise Hindernisse in einem Umgebungsbereich 7 des Kraftfahrzeugs 1 erfasst werden. Mit den jeweiligen Sensoren 4 können Sensordaten bereitgestellt werden, welche das zumindest eine Objekt 8, 9 in dem Umgebungsbereich 7 beschreibt. Insbesondere umfassen die Sensordaten eine Abstandsinformation, die den Abstand zwischen dem Sensor 4 und dem Objekt 8,9 beschreiben. Die Sensoren 4 sind zur Datenübertragung mit der Steuereinrichtung 3 verbunden. Entsprechende Datenleitungen sind vorliegend der Übersichtlichkeit halber nicht dargestellt.

Die jeweiligen Sensoren 4 können die Sensordaten an die Steuereinrichtung 3 übertragen. Die Steuereinrichtung 3 kann dann die Sensordaten entsprechend auswerten und beispielsweise eine Position des zumindest einen Objekts 8, 9 bestimmen. Ferner kann die Steuereinrichtung 3 eine relative Lage zwischen einem Bezugspunkt 13 des Kraftfahrzeugs 1 und dem zumindest einen Objekt 8, 9 bestimmen. Der Bezugspunkt 13 ist vorliegend einem Mittelpunkt der Hinterachse des Kraftfahrzeugs 1 zugeordnet. Mit der Steuereinrichtung 3 kann ferner eine digitale Umfeldkarte bereitgestellt werden, in der das zumindest eine Objekt 8, 9 und dessen Position eingetragen werden kann.

Jeder der Sensoren 4 weist einen Detektionsbereich 10 auf, der denjenigen Bereich beschreibt, in dem mit dem Sensor 4 Objekte 8, 9 erfasst werden können. Die jeweiligen Detektionsbereiche 10 sind vorliegend im Wesentlichen kegelförmig ausgebildet. Zwischen den Detektionsbereichen 10 und einer Außenfläche 11 des Kraftfahrzeugs 1 ist ein sogenannter Blindbereich 12 ausgebildet, in welchem die Objekte 8, 9 mit den jeweiligen Sensoren 4 nicht oder nicht vollständig erfasst werden können. Die räumliche Erstreckung des Blindbereichs 12 zwischen dem Sensor 4 und dem Detektionsbereich 10 kann bei den Sensoren 4, die als Ultraschallsensoren ausgebildet sind, etwa 30 cm betragen. Die räumliche Erstreckung der jeweiligen Detektionsbereiche 10 der Sensoren 4 kann in der Steuereinrichtung 3 hinterlegt sein. Zudem können die jeweiligen Einbaupositionen der Sensoren 4 in der Steuereinrichtung 3 gespeichert sein.

Bei dem vorliegenden Beispiel sind die Sensoren 4 des Fahrerassistenzsystems 2 als Ultraschallsensoren ausgebildet. Alternativ oder zusätzlich kann das Fahrerassistenzsystem 2 weitere Sensoren 4 aufweisen, welche als Radarsensor, Laserscanner, Lidar-Sensor und/oder als Kamera ausgebildet sind. Je nach Typ des Sensors 4 ergibt sich der Detektionsbereich 10 des Sensors 4. Es kann auch vorgesehen sein, dass sich die Detektionsbereiche 10 der Sensoren 4 überlappen.

Darüber hinaus umfasst das Fahrerassistenzsystem 2 eine Ausgabeeinrichtung 14, mittels welcher an den Fahrer des Kraftfahrzeugs 1 beziehungsweise einen weiteren Insassen des Kraftfahrzeugs 1 eine Information ausgegeben werden kann. Beispielsweise kann mittels der Ausgabeeinrichtung 14 ein optisches, ein akustisches und/oder ein haptisches Warnsignal ausgegeben werden.

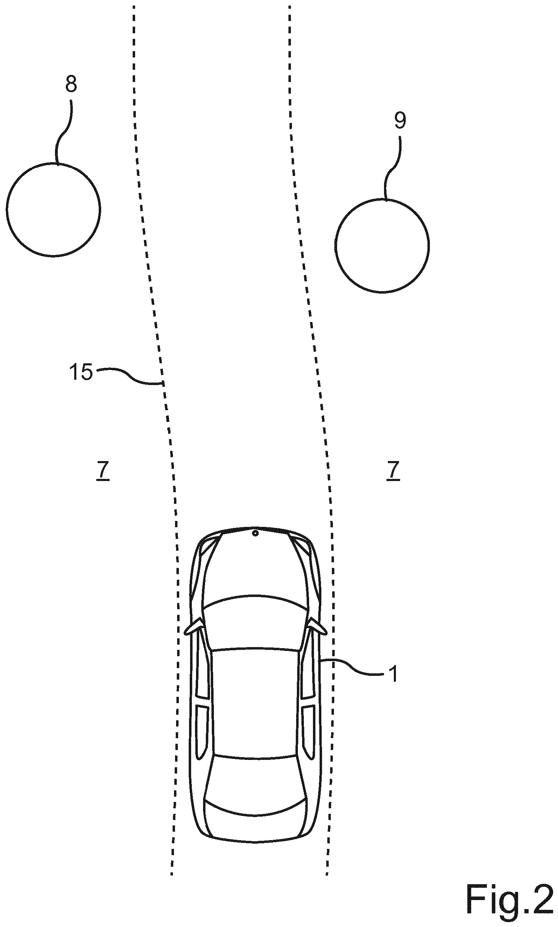

Vorliegend soll das Kraftfahrzeug 1 manövriert werden. Zu diesem Zweck wird ein Fahrschlauch 15 bestimmt, in dem das Kraftfahrzeug 1 manövriert beziehungsweise bewegt wird. Ein derartiger Fahrschlauch 15 ist beispielhaft in Fig. 2 dargestellt. Der Fahrschlauch 15 kann mit der Steuereinrichtung 3 bestimmt werden. Hierzu kann die Steuereinrichtung 3 die Sensordaten, die sie von den Sensoren 4 empfangen hat, heranziehen und den Fahrschlauch 15 derart bestimmten, dass dieser kollisionsfrei an den Objekten 8, 9 in dem Umgebungsbereich 7 des Kraftfahrzeugs 1 vorbeigeführt wird. In dem Beispiel von Fig. 2 befinden sich in dem Umgebungsbereich 7 des Kraftfahrzeugs 1 zwei vorliegend schematisch dargestellte Objekte 8 und 9. Der Fahrschlauch 15 führt zwischen den beiden Objekten 8 und 9 hindurch, sodass eine Kollision zwischen dem Kraftfahrzeug 1 und den Objekten 8, 9 verhindert wird.

Alternativ oder zusätzlich kann es auch vorgesehen sein, dass der Fahrschlauch 15 auf Grundlage einer Bedienung einer fahrzeugexternen Bedieneinrichtung 16 bestimmt wird. Bei der Bedieneinrichtung 16 kann es sich beispielsweise um ein Smartphone, einen Funkschlüssel oder dergleichen handeln. Diese fahrzeugexterne Bedieneinrichtung 16 kann beispielsweise von dem Fahrer des Kraftfahrzeugs 1 bedient werden, wenn sich dieser außerhalb des Kraftfahrzeugs 1 befindet. Infolge der Bedieneingabe von dem Fahrer kann dann mittels der Bedieneinrichtung 16 ein Steuersignal erzeugt werden und an die Steuereinrichtung 3 des Kraftfahrzeugs 1 übertragen werden. Das Steuersignal kann insbesondere drahtlos von der Bedieneinrichtung 16 an die Steuereinrichtung 3 übertragen werden. Auf Grundlage dieses Steuersignals kann dann die Steuereinrichtung 3 das Kraftfahrzeug innerhalb des Fahrschlauchs 15 manövrieren.

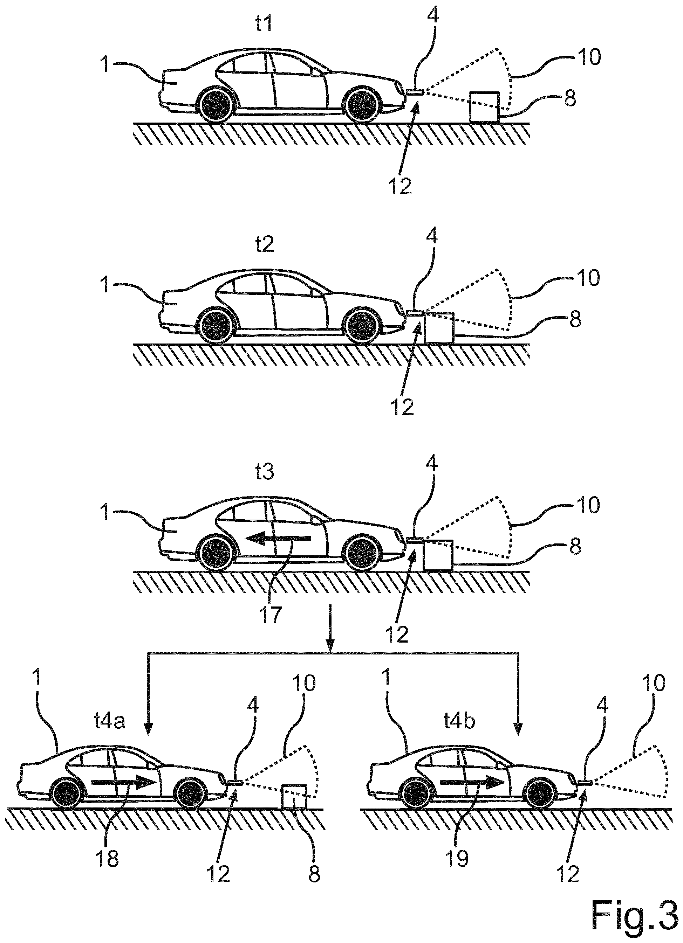

Fig. 3 zeigt das Kraftfahrzeug 1 gemäß Fig. 2 während des Manövrierens in dem Fahrschlauch 15 zu unterschiedlichen Zeitpunkten t1, t2, t3, t4a und t4b. Vorliegend wird das Kraftfahrzeug 1 in dem Fahrschlauch in Vorwärtsfahrtrichtung bewegt. Während der Fahrt des Kraftfahrzeugs 1 innerhalb des Fahrschlauchs 15 wird das zumindest eine Objekt 8, 9 fortlaufend mit den Sensoren 4 erfasst. Zudem wird die relative Lage zwischen dem Kraftfahrzeug 1 und dem zumindest einen Objekt 8, 9 fortlaufend mittels der Steuereinrichtung 3 bestimmt. Zu dem Zeitpunkt t1 befindet sich das Objekt 8 innerhalb des Detektionsbereichs 10 eines der Sensoren 4. Dies ist beispielsweise gegeben, wenn es sich bei dem Objekt 8 um ein bewegtes Objekt handelt, das sich während der Fahrt des Kraftfahrzeugs 1 innerhalb des Fahrschlauchs 15 in den Fahrschlauch 15 hinein bewegt.

Zu einem Zeitpunkt t2, der zeitlich auf den Zeitpunkt t1 folgt, hat sich das Kraftfahrzeug 1 näher auf das Objekt 8 zu bewegt. Vorliegend befindet sich das Objekt 8 außerhalb des Detektionsbereichs 10 in dem Blindbereich 12. In dem Blindbereich kann das Objekt 8 nicht mehr oder nicht mehr vollständig mit dem Sensor 4 erfasst werden. In diesem Fall wird mittels der Steuereinrichtung 3 die Position des Objekts 8 geschätzt. Hierzu kann beispielsweise die aktuelle Geschwindigkeit und/oder die aktuelle Fahrtrichtung des Kraftfahrzeugs 1 herangezogen werden. Zudem kann die Bewegung des Objekts 8, die erfasst wurde, während sich das Objekt 8 in dem Detektionsbereich 10 befunden hat, herangezogen werden. Somit kann ein Schätzwert für die Position des Objekts 8 innerhalb des Blindbereichs 12 bestimmt werden.

Zu einem Zeitpunkt t3, der zeitlich auf den Zeitpunkt t2 folgt, wird mittels der Steuereinrichtung 3 die Fahrt des Kraftfahrzeugs 1 innerhalb des Fahrschlauchs 15 unterbrochen. Das Kraftfahrzeug 1 wird also bis zum Stillstand abgebremst. Mit der Steuereinrichtung 3 wird dann eine Erfassungsposition bestimmt, in welche das Kraftfahrzeug 1 bewegt wird. Die Bewegung des Kraftfahrzeugs 1 zu der Erfassungsposition ist durch den Pfeil 17 verdeutlicht. Dabei ist die Erfassungsposition derart bestimmt, dass sich die geschätzte Position des Objekts 8 in dem Detektionsbereich 10 befindet, falls sich das Kraftfahrzeug 1 in der Erfassungsposition befindet. Um zu der Erfassungsposition zu gelangen, wird das Kraftfahrzeug 1, das entlang des Fahrschlauchs 15 zunächst vorwärts bewegt wurde, entlang des Fahrschlauchs 15 rückwärts bewegt. Dies ist vorliegend durch den Pfeil 17 verdeutlich. Wenn sich das Kraftfahrzeug 1 an der Erfassungsposition befindet, können sich grundsätzlich zwei Alternativen ergeben, die vorliegend als die Zeitpunkte t4a und t4b dargestellt sind. Zu einem Zeitpunkt t4a, der zeitlich auf den Zeitpunkt t3 folgt, befindet sich das Kraftfahrzeug 1 an der Erfassungsposition. Die geschätzte Position des Objekts 8 befindet sich also in dem Detektionsbereich 10 des Sensors 4. Hierbei wird überprüft, ob sich das Objekt 8 innerhalb des Fahrschlauchs 15 befindet. Ist dies der Fall, kann ein veränderter Fahrschlauch bestimmt werden, entlang dem das Kraftfahrzeug 1 manövriert wird. Falls ein veränderter Fahrschlauch nicht ermittelt werden kann, kann das Fahrerassistenzsystem 2 an den Fahrer des Kraftfahrzeugs 1 übergeben. Es kann auch ein vorbestimmte zeitliche Dauer abgewartet werden, bis das Objekt 8 aus dem Fahrschlauch 15 entfernt wurde oder sich das Objekt 8 selbst aus dem Fahrschlauch 15 heraus bewegt hat.

Der Zeitpunkt t4b, der zeitlich auf den Zeitpunkt t3 folgt, zeigt die Alternative, bei der sich kein Objekt in dem Detektionsbereich 10 befindet, während sich das Kraftfahrzeug 1 an der Erfassungsposition befindet. In diesem Fall kann die Fahrt entlang des bestimmten Fahrschlauchs 15 weitergeführt werden. Dies ist vorliegend durch den Pfeil 19 verdeutlich.

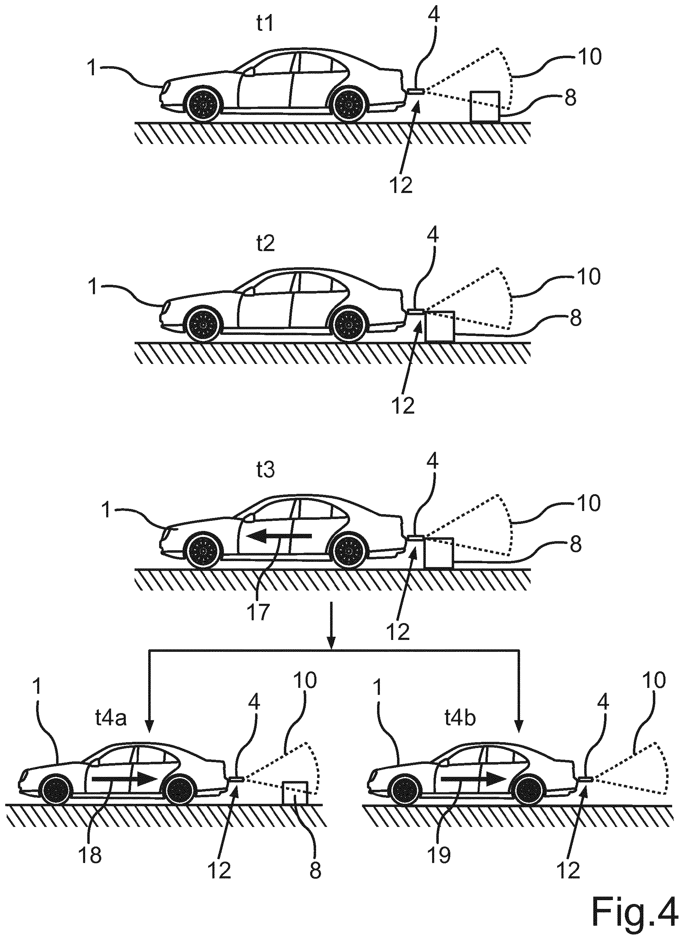

Fig. 4 zeigt das Kraftfahrzeug 1 während eines Manövrierens innerhalb eines Fahrschlauchs 15 gemäß einer weiteren Ausführungsform. Hier wird das Kraftfahrzeug 1 zunächst rückwärts entlang des Fahrschlauchs 15 bewegt. Zu dem Zeitpunkt t1 befindet sich das Objekt 8 innerhalb des Detektionsbereichs 10 des Sensors 4. Zu dem darauffolgenden Zeitpunkt t2 befindet sich das Objekt 8 in dem Blindbereich 12. Zu dem Zeitpunkt t3 wird die Erfassungsposition bestimmt und das Kraftfahrzeug 1 in die Erfassungsposition bewegt. Zu dem Zeitpunkt t4a befindet sich das Objekt 8 wieder in dem Detektionsbereich 10. Alternativ dazu zeigt der Zeitpunkt t4b den Fall, in dem sich kein Objekt innerhalb des Detektionsbereichs 10 befindet.

## Patentansprüche

1. Verfahren zum Manövrieren eines Kraftfahrzeugs (1), bei welchem das Kraftfahrzeug (1) innerhalb eines bestimmten Fahrschlauchs (15) manövriert wird, während des Manövrierens mittels einer Steuereinrichtung (3) anhand von Sensordaten zumindest eines Sensors (4) des Kraftfahrzeugs (1), welcher einen vorbestimmten Detektionsbereich (10) aufweist, eine Position zumindest eines Objekts (8, 9) in einem Umgebungsbereich (7) des Kraftfahrzeugs (1) fortlaufend bestimmt wird und falls sich das zumindest eine Objekt (8, 9) außerhalb des Detektionsbereichs (10) des zumindest einen Sensors (4) befindet, die Position des zumindest einen Objekts (8, 9) geschätzt wird,
wobei mittels der Steuereinrichtung (3) eine Erfassungsposition bestimmt wird und das Kraftfahrzeug (1) zu der Erfassungsposition bewegt wird, falls sich das zumindest eine Objekt (8, 9) außerhalb des Detektionsbereichs (10) befindet, wobei die Erfassungsposition derart bestimmt wird, dass sich die geschätzte Position des zumindest einen Objekts (8, 9) innerhalb des Detektionsbereichs (10) befindet, falls sich das Kraftfahrzeug (1) an der Erfassungsposition befindet,
und wobei an der Erfassungsposition anhand der Sensordaten während einer vorbestimmten zeitlichen Dauer überprüft wird, ob das zumindest eine Objekt (8, 9) innerhalb des bestimmten Fahrschlauchs (15) angeordnet ist,
**dadurch gekennzeichnet, dass**
das Kraftfahrzeug (1) zu der Erfassungsposition bewegt wird, falls sich das zumindest eine Objekt (8, 9) in einem vorbestimmten Blindbereich (12) des zumindest einen Sensors (4) befindet, wobei der Blindbereich zwischen dem Detektionsbereich (10) und einer Außenfläche (11) des Kraftfahrzeugs (1) angeordnet ist.

2. Verfahren nach Anspruch 1,
**dadurch gekennzeichnet, dass** das Kraftfahrzeug beim Manövrieren in einer ersten Fahrtrichtung bewegt wird, und
das Kraftfahrzeug (1) zu der Erfassungsposition innerhalb des bestimmten Fahrschlauchs (15) in einer zu der ersten Fahrtrichtung entgegengesetzten, zweiten Fahrtrichtung bewegt wird.

3. Verfahren nach einem der vorhergehenden Ansprüche,
**dadurch gekennzeichnet, dass**
die Erfassungsposition in Abhängigkeit von einer relativen Lage des Kraftfahrzeugs (1) zu dem zumindest einen Objekt (8, 9) und dem Detektionsbereich (10) des zumindest einen Sensors (4) bestimmt wird.

4. Verfahren nach einem der vorhergehenden Ansprüche,
**dadurch gekennzeichnet, dass**
das Kraftfahrzeug (1) weiter innerhalb des bestimmten Fahrschlauchs (15) bewegt wird, falls das zumindest eine Objekt (8, 9) nicht in dem bestimmten Fahrschlauch (15) angeordnet ist.

5. Verfahren nach einem der vorhergehenden Ansprüche,
**dadurch gekennzeichnet, dass**
ein veränderter Fahrschlauch bestimmt wird und das Kraftfahrzeug (1) innerhalb des veränderten Fahrschlauchs (15) bewegt wird, falls das zumindest eine Objekt (8, 9) in dem bestimmten Fahrschlauch (15) angeordnet ist.

6. Verfahren nach einem der vorhergehenden Ansprüche,
**dadurch gekennzeichnet, dass**
mittels einer Ausgabeeinrichtung (14) eine Ausgabe an einen Fahrer des Kraftfahrzeugs (1) ausgegeben wird, falls das zumindest eine Objekt (8, 9) in dem bestimmten Fahrschlauch (15) angeordnet ist.

7. Verfahren nach einem der vorhergehenden Ansprüche,
**dadurch gekennzeichnet, dass**
das Kraftfahrzeug (1) mittels der Steuereinrichtung (3) zumindest semi-autonom innerhalb des bestimmten Fahrschlauchs (15) manövriert wird.

8. Verfahren nach einem der vorhergehenden Ansprüche,
**dadurch gekennzeichnet, dass**
mittels der Steuereinrichtung (3) ein Steuersignal von einer kraftfahrzeugexternen Bedieneinrichtung (16) empfangen wird und das Kraftfahrzeug (1) in Abhängigkeit von dem empfangenen Steuersignal innerhalb des bestimmten Fahrschlauchs (15) manövriert wird.

9. Verfahren nach einem der vorhergehenden Ansprüche,
**dadurch gekennzeichnet, dass**
die Position des zumindest einen Objekts (8, 9) in eine digitale Umfeldkarte eingetragen wird, welche den Umgebungsbereich (7) des Kraftfahrzeugs (1) beschreibt.

10. Steuereinrichtung (3) für ein Fahrerassistenzsystem (2) eines Kraftfahrzeugs (1), welche zum Durchführen eines Verfahrens nach einem der vorhergehenden Ansprüche ausgebildet ist.

11. Fahrerassistenzsystem (2) für ein Kraftfahrzeug (1) mit einer Steuereinrichtung (3) nach Anspruch 10 und zumindest einem Sensor (4).

12. Kraftfahrzeug (1) mit einem Fahrerassistenzsystem (2) nach Anspruch 11.

## Claims

1. Method for manoeuvring a motor vehicle (1), in which the motor vehicle (1) is manoeuvred within a determined driving tube (15), during the manoeuvring a position of at least one object (8, 9) in a surrounding area (7) of the motor vehicle (1) is continuously determined by means of a control unit (3) on the basis of sensor data of at least one sensor (4) of the motor vehicle (1), which sensor (4) has a predetermined detection range (10), and if the at least one object (8, 9) is located outside the detection range (10) of the at least one sensor (4), the position of the at least one object (8, 9) is estimated,
wherein a sensing position is determined by means of the control unit (3), and the motor vehicle (1) is moved to the sensing position if the at least one object (8, 9) is located outside the detection range (10), wherein the sensing position is determined in such a way that the estimated position of the at least one object (8, 9) is located within the detection range (10) if the motor vehicle (1) is located at the sensing position,
and wherein at the sensing position the sensor data is used to check, during a predetermined time period, whether the at least one object (8, 9) is arranged within the determined driving tube (15),
**characterized in that**
the motor vehicle (1) is moved to the sensing position if the at least one object (8, 9) is located in a predetermined blind spot (12) of the at least one sensor (4), wherein the blind spot is arranged between the detection range (10) and an external surface (11) of the motor vehicle (1).

2. Method according to Claim 1,
**characterized in that**
the motor vehicle is moved in a first direction of travel when manoeuvring, and the motor vehicle (1) is moved in a second direction of travel, opposite to the first direction of travel, to the sensing position within the determined driving tube (15).

3. Method according to either of the preceding claims,
**characterized in that**
the sensing position is determined as a function of a relative location of the motor vehicle (1) with respect to the at least one object (8, 9) and the detection range (10) of the at least one sensor (4).

4. Method according to one of the preceding claims,
**characterized in that**
the motor vehicle (1) is moved further within the determined driving tube (15) if the at least one object (8, 9) is not arranged in the determined driving tube (15).

5. Method according to one of the preceding claims,
**characterized in that**
a changed driving tube is determined, and the motor vehicle (1) is moved within the changed driving tube (15) if the at least one object (8, 9) is arranged in the determined driving tube (15).

6. Method according to one of the preceding claims,
**characterized in that**
an output is output to a driver of the motor vehicle (1) by means of an output device (14) if the at least one object (8, 9) is arranged in the determined driving tube (15).

7. Method according to one of the preceding claims,
**characterized in that**
the motor vehicle (1) is manoeuvred at least semi-autonomously within the determined driving tube (15) by means of the control unit (3).

8. Method according to one of the preceding claims,
**characterized in that**
a control signal is received from a motor-vehicle-external operator control unit (16) by means of the control unit (3), and the motor vehicle (1) is manoeuvred within the determined driving tube (15) as a function of the received control signal.

9. Method according to one of the preceding claims,
**characterized in that**
the position of the at least one object (8, 9) is input into a digital map of the surroundings which describes the surrounding area (7) of the motor vehicle (1).

10. Control unit (3) for a driver assistance system (2) of a motor vehicle (1), which is designed to carry out a method according to one of the preceding claims.

11. Driver assistance system (2) for a motor vehicle (1) having a control unit (3) according to Claim 10, and having at least one sensor (4).

12. Motor vehicle (1) having a driver assistance system (2) according to Claim 11.

## Revendications

1. Procédé pour manœuvrer un véhicule automobile (1), avec lequel le véhicule automobile (1) est manœuvré à l'intérieur d'un couloir de circulation (15) déterminé, une position d'au moins un objet (8, 9) dans la zone environnante (7) du véhicule automobile (1) est déterminée continuellement pendant la manœuvre au moyen d'un dispositif de commande (3) à l'aide de données de capteur d'au moins un capteur (4) du véhicule automobile (1), lequel possède une zone de détection (10) prédéterminée, et dans le cas où l'au moins un objet (8, 9) se trouve en-dehors de la zone de détection (10) de l'au moins un capteur (4), la position de l'au moins un objet (8, 9) est estimée,
une position d'acquisition étant déterminée au moyen du dispositif de commande (3) et le véhicule automobile (1) étant déplacé vers la position d'acquisition dans le cas où l'au moins un objet (8, 9) se trouve en-dehors de la zone de détection (10), la position d'acquisition étant déterminée de telle sorte que la position estimée de l'au moins un objet (8, 9) se trouve à l'intérieur de la zone de détection (10) dans le cas où le véhicule automobile (1) se trouve à la position d'acquisition,
et un contrôle étant effectué à la position d'acquisition à l'aide des données de capteur pendant une durée prédéterminée afin de vérifier si l'au moins un objet (8, 9) est disposé à l'intérieur du couloir de circulation (15) déterminé,
**caractérisé en ce que**
le véhicule automobile (1) est déplacé vers la position d'acquisition dans le cas où l'au moins un objet (8, 9) se trouve dans une zone sans visibilité (12) prédéterminée de l'au moins un capteur (4), la zone sans visibilité étant disposée entre la zone de détection (10) et une surface extérieure (11) du véhicule automobile (1) .

2. Procédé selon la revendication 1, **caractérisé en ce que** le véhicule automobile, lors de la manœuvre, est déplacé dans un premier sens de circulation et le véhicule automobile (1) se déplace vers la position d'acquisition à l'intérieur du couloir de circulation (15) déterminé dans un deuxième sens de circulation opposé au premier sens de circulation.

3. Procédé selon l'une des revendications précédentes, **caractérisé en ce que** la position d'acquisition est déterminée en fonction d'une position relative du véhicule automobile (1) par rapport à l'au moins un objet (8, 9) et la zone de détection (10) de l'au moins un capteur (4).

4. Procédé selon l'une des revendications précédentes, **caractérisé en ce que** le véhicule automobile (1) poursuit son déplacement à l'intérieur du couloir de circulation (15) déterminé dans le cas où l'au moins un objet (8, 9) n'est pas disposé dans le couloir de circulation (15) déterminé.

5. Procédé selon l'une des revendications précédentes, **caractérisé en ce qu'**un couloir de circulation modifié est déterminé et le véhicule automobile (1) est déplacé à l'intérieur du couloir de circulation (15) modifié dans le cas où l'au moins un objet (8, 9) est disposé dans le couloir de circulation (15) déterminé.

6. Procédé selon l'une des revendications précédentes, **caractérisé en ce qu'**une émission est délivrée en sortie à un conducteur du véhicule automobile (1) au moyen d'un dispositif d'émission (14) dans le cas où l'au moins un objet (8, 9) est disposé dans le couloir de circulation (15) déterminé.

7. Procédé selon l'une des revendications précédentes, **caractérisé en ce que** le véhicule automobile (1) est manœuvré de manière au moins semi-autonome à l'intérieur du couloir de circulation (15) déterminé au moyen du dispositif de commande (3).

8. Procédé selon l'une des revendications précédentes, **caractérisé en ce qu'**un signal de commande est reçu au moyen du dispositif de commande (3) en provenance d'un dispositif d'opération externe au véhicule automobile (16) et le véhicule automobile (1) est manœuvré à l'intérieur du couloir de circulation (15) déterminé en fonction du signal de commande reçu.

9. Procédé selon l'une des revendications précédentes, **caractérisé en ce que** la position de l'au moins un objet (8, 9) est enregistrée dans une carte d'environnement numérique qui décrit la zone environnante (7) du véhicule automobile (1).

10. Dispositif de commande (3) pour un système d'assistance au conducteur (2) d'un véhicule automobile (1), lequel est configuré pour mettre en œuvre un procédé selon l'une des revendications précédentes.

11. Système d'assistance au conducteur (2) pour un véhicule automobile (1) comprenant un dispositif de commande (3) selon la revendication 10 et au moins un capteur (4).

12. Véhicule automobile (1) comprenant un système d'assistance au conducteur (2) selon la revendication 11.
